# EUROPÄISCHE PATENTANMELDUNG

(11) **EP 1 496 347 A1**
(43) Veröffentlichungstag der Anmeldung: **12.01.2005**
(21) Anmeldenummer: 04009564.8
(22) Anmeldetag: 22.04.2004
(51) Int. Cl.: G01M 17/00

(54) **Vorrichtung zum Führen einer bewegbaren Plattform in einem zweidimensionalen Versuchsraum**

(30) Priorität: 09.07.2003 DE 10331101
(71) Anmelder: SIEMENS AKTIENGESELLSCHAFT, 80333 München (DE)
(72) Erfinder: Grimm, Peter, Dr., 91056 Erlangen (DE); Kappey, Hans-Heinrich, 90439 Nürnberg (DE); Lorenz, Günter, Dr., 90455 Nürnberg (DE)

(57) **Zusammenfassung**

Die Erfindung betrifft eine Vorrichtung zum Führen einer bewegbaren Plattform in einem zweidimensionalen Versuchsraum mit zumindest drei, mit der Plattform verbundenen, Kraftübertragungseinrichtungen und einer Steuereinrichtung zum Steuern von Kraftänderungen über die Kraftübertragungseinrichtungen. Die Kraftübertragungseinrichtungen sind so angeordnet und so mit der Plattform verbunden, dass die über die Kraftübertragungseinrichtungen von außerhalb des Versuchsraums auf die Plattform einwirkenden Kraftänderungen die Plattform zu einer eindeutig bestimmten Position im Versuchsraum führt.

## Beschreibung

Die Erfindung betrifft eine Vorrichtung zum Führen einer bewegbaren Plattform in einem zweidimensionalen Versuchsraum.

Messanordnungen mit einer, in einem zweidimensionalen Versuchsraum, bewegbaren Plattform erlauben beispielsweise das Messen und Prüfen von Kräften oder Beschleunigungen, die auf, auf der Plattform angeordnete, Objekte einwirken. Damit die Messungen möglichst wenig durch Randbedingungen eingeschränkt werden, muss die Plattform frei im Versuchsraum bewegbar sein. Dies ist im Allgemeinen näherungsweise erfüllt, wenn die Plattform eine eigene Antriebseinheit beinhaltet. Diese Antriebseinheit ist aber, abhängig von dem Gewicht der Objekte und den gewünschten Beschleunigungen der zu bewegenden Plattform, sperrig und schwer. Ist zudem der Versuchraum begrenzt, weil dieser sich beispielsweise in einer Halle befindet, können mit solch einer Plattform mit eigener Antriebseinheit gegebenenfalls nicht die gewünschten hohen Beschleunigungen realisiert werden.

Aufgabe der vorliegenden Erfindung ist es, eine Vorrichtung bereitzustellen, die es erlaubt, eine Plattform ohne eigene Antriebseinheit in einem zweidimensionalen Versuchsraum zu führen.

Diese Aufgabe wird gelöst durch eine Vorrichtung zum Führen einer bewegbaren Plattform in einem zweidimensionalen Versuchsraum nach Anspruch 1 mit zumindest drei, mit der Plattform verbundenen Kraftübertragungseinrichtungen, einer Steuereinrichtung zum Steuern von Kraftänderungen über die Kraftübertragungseinrichtungen, wobei die Kraftübertragungseinrichtungen so angeordnet sind und so mit der Plattform verbunden sind, dass die über die Kraftübertragungseinrichtungen von außerhalb des Versuchsraums auf die Plattform einwirkenden Kraftänderungen, die Plattform zu einer eindeutig bestimmten Position im Versuchsraum führen.

Dadurch, dass zumindest drei Kraftübertragungseinrichtungen so angeordnet sind und so mit der Plattform verbunden sind, dass die über die Kraftübertragungseinrichtungen von außerhalb des Versuchsraums auf die bewegbare Plattform einwirkenden Kraftänderungen die Plattform zu einer eindeutig bestimmten Position im Versuchsraum führen, kann die ansonsten notwendige Antriebseinheit auf der Plattform entfallen. Damit kann in der Regel die Plattform weniger groß ausgebildet werden und sie wird zudem weniger schwer sein. Dies ermöglicht, das ein auf der Plattform angeordnetes Objekt in einem begrenzten zweidimensionalen Versuchsraum höheren Beschleunigungen ausgesetzt werden kann. Dies erlaubt dann, dass höhere, auf ein Objekt einwirkende Beschleunigungen und deren Auswirkungen messbar sind. Durch die Anordnung mit mindestens drei Kraftübertragungseinrichtungen, die geeignet angeordnet sind, kann die Plattform zu jedem beliebigen Punkt innerhalb des zweidimensionalen Versuchsraumes geführt werden und ist somit frei im Versuchsraum bewegbar. Die Steuereinrichtung führt die Plattform im zweidimensionalen Versuchsraum zu einer eindeutig bestimmten Position, indem sie die über die Kraftübertragungseinrichtungen die auf die Plattform einwirkenden Kraftänderungen steuert. Durch entsprechendes Aneinanderreihen von infinitesimal kleinen Kraftänderungen und damit infinitesimal kleinen Wegänderungen der Plattform im Versuchsraum kann die Plattform auch auf beliebig komplexen Wegen durch den Versuchsraum geführt werden. Damit lasst sich dann beispielsweise auch die auf die Plattform und damit auf das Objekt einwirkende Kräfte messen, wenn die Plattform beispielsweise auf einer Kreisbahn oder einer Zickzackbahn geführt wird. Dies ermöglichst auch komplexe Situationen im Versuchsraum nachzubilden und die bei hohen Beschleunigungen auf das Objekt einwirkenden Kräfte und Beschleunigungen zu messen.

In einer vorteilhaften Ausbildung sind die Kraftübertragungseinrichtungen als Seile mit Seilantrieben ausgebildet. Weisen die Seile entsprechende mechanische Zugeigenschaften auf, können auch entsprechend schwere Plattformen im Versuchsraum bewegt werden. Die Orte der Seilantriebe außerhalb des Versuchsraumes bestimmen die Abmessungen des zweidimensionalen Versuchsraumes und sind zudem der Ausgangspunkt für die Richtung der auf die Plattform einwirkenden Kraftänderungen. Zusätzliche Führungseinrichtungen an diesen Orten ermöglichen, dass die Seilantriebe an einer beliebig anderen Stelle außerhalb des Versuchsraumes angeordnet werden können.

In einer Ausbildung der vorliegenden Erfindung sind die Seilantriebe und/oder die Führungseinrichtungen außerhalb des Versuchsraums bewegbar angeordnet und von der Steuereinrichtung steuerbar. Damit lassen sich deren Orte und damit die Richtungen der über die Kraftübertragungseinrichtungen auf das Objekt einwirkenden Kraftänderungen verändern. Dadurch kann bei geeigneter Steuerung, die Plattform mit geringeren Kraftänderungen zu einer Position im Versuchsraum bewegt werden.

Mittel zur Übertragung von Energie und/oder Daten und/oder Materialien von und zur bewegbaren Plattform können vorgesehen sein, um die an der Plattform gemessenen Daten, wie beispielsweise die einwirkenden Beschleunigungskräfte, zur weiteren Auswertung an die Steuereinrichtung zu übermitteln. Zusätzlich können die Mittel vorgesehen sein, um die zum Steuern von Kraftänderungen entsprechenden Daten auch von der Steuereinrichtung an die Plattform zu übermitteln. Weiterhin können möglicherweise notwendige Energiespeicher auf der Plattform entfallen, wenn über diese Mittel auch Hilfsenergien oder andere Materialien, wie Kühlflüssigkeit, übertragen werden. Durch geeignete Auswahl der Kraftübertragungseinrichtungen können diese zusätzlich zur Übertragung von Energie und/oder Daten und/oder Materialien genutzt werden. Somit können zusätzliche Leitungen, die mit der Plattform verbunden sind und damit auch im Versuchsraum ggf. stören, entfallen.

Vorzugsweise weist die bewegbare Plattform eine erste Einrichtung, an der Radmodule befestigt sind, und eine zweite Einrichtung, die mit den Kraftübertragungseinrichtungen verbunden ist, auf. Dadurch, dass die erste und zweite Einrichtung um eine gemeinsame Achse gegeneinander drehbar sind, können die auf die erste Einrichtung und damit auf das darauf befindliche Objekt wirkenden Beschleunigungskräfte noch weiter erhöht werden, wenn gleichzeitig mit einer gesteuerten Kraftänderung über die Kraftübertragungseinrichtungen die erste Einrichtung gegenüber der zweiten Einrichtung gedreht wird. Zur Unterstützung dieser Drehbewegung kann zusätzlich ein Hilfsantrieb vorgesehen sein, der entsprechend von der Steuereinrichtung gesteuert wird.

Die Erfindung sowie vorteilhafte Ausführungen derselben werden im weitern anhand der nachfolgenden Figuren näher beschrieben. Es zeigen:
- Fig.1:: die erfindungsgemäße Vorrichtung mit drei Kraftübertragungseinrichtungen,
- Fig.2:: eine mögliche Ausführungsform der im Versuchsraum bewegbaren Plattform.

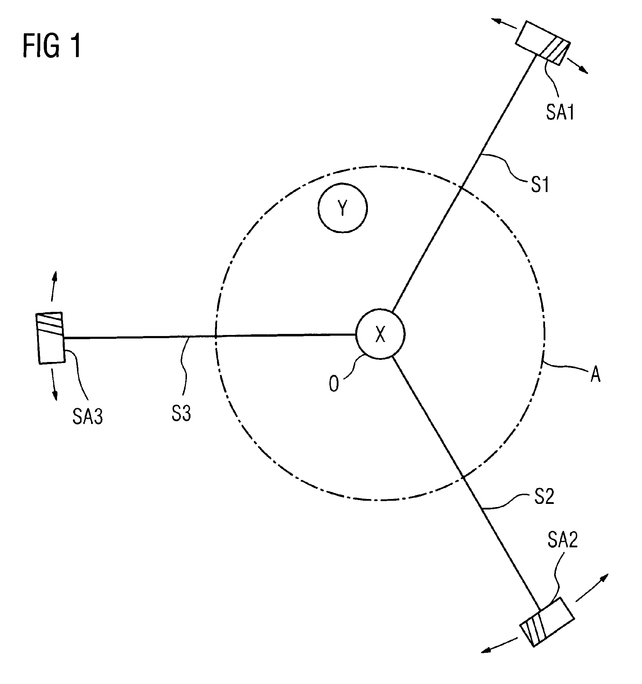

Figur 1 zeigt die erfindungsgemäße Vorrichtung zum Führen einer bewegbaren Plattform O in eine Versuchsraum A mit drei Kraftübertragungseinrichtungen. In der gezeigten Ausführungsform der Erfindung beinhaltet jede der Kraftübertragungseinrichtungen ein Seil S1,S2 und S3, sowie einen Seilantrieb SA1, SA2 und SA3. Die Seilantriebe sind außerhalb des Versuchsraumes A angeordnet. Die Seile S1,S2 und S3 sind am einen Ende mit dem Plattform O und am anderen Ende mit dem entsprechenden Seilantrieb SA1, SA2 oder SA3 verbunden. Abhängig von den Orten der Seilantriebe SA1, SA2 und SA3 ist die Richtung der über die Kraftübertragungseinrichtungen auf die Plattform 0 einwirkenden Kraftänderungen vorgegeben. Ferner bestimmen die Orte der Seilantriebe SA1, SA2 und SA3 die Abmessungen des Versuchsraums A, innerhalb dessen die Plattform O beliebig, aber eindeutig durch die einwirkende Kraftänderung bewegbar ist. In der in Figur 1 gezeigten Ausführung ist der Versuchsraum A, der durch die Orte der Seilantriebe SA1, SA2 und SA3 aufgespannt wird, der durch die gestrichelte Linie begrenzte zweidimensional Raum A. Befindet sich die Plattform O nun beispielsweise an einer Position X, so kann diese dadurch zu einer Position Y innerhalb des Versuchsraumes A geführt werden, indem eine Steuereinrichtung (nicht gezeigt) die entsprechend notwendigen Kraftänderungen steuert. Um die Plattform O im vorliegenden Beispiel von der Position X zur Position Y zu führen, müssen die Seilantriebe SA3 und SA1 so von der Steuereinrichtung gesteuert werden, dass die Längen der Seile S3 und S1 zwischen den Seilantrieben SA3 und SA1 und der Plattform O entsprechend verkürzt werden und entsprechend die Länge des Seils S2 verlängert wird. Dazu werden die Seile S3 und S1 auf die entsprechenden Seilantriebe SA3 und SA1, die beispielsweise als Haspelantriebe ausgebildet sind, aufgewickelt und entsprechend das Seil S2 vom Seilantrieb SA2 abgewickelt. Die durch die Veränderung der Seillängen resultierenden und damit auf die Plattform O einwirkenden Kraftänderungen bewirken, dass die Plattform von der Position X in Richtung der Position Y beschleunigt und bewegt wird. Dadurch, dass die Steuereinrichtung die Seilantriebe SA1, SA2, SA3 und somit die Seillängen zwischen Plattform und Seilantriebe steuert, kommt es zu einer entsprechenden auf die Plattform einwirkenden Kraftänderung, welche dann die Plattform O von Position X zu Position Y im Versuchsraum führt. Der Steuereinrichtung muss eine Beziehung zwischen jeder der möglichen Positionen und den entsprechend notwendigen Kraftänderungen bekannt sein, so dass die Plattform O durch die Steuerung von Kraftänderungen zu jeder eindeutig bestimmten Position im Versuchsraum A geführt werden kann. Diese Beziehungen sollen hier aber nicht näher beschrieben werden.

Sie erschließen sich dem Fachmann aus der Art und der Anordnung der erfindungsgemäßen Vorrichtung.

Durch entsprechendes Aneinanderreihen von infinitesimal kleinen Kraftänderungen und damit infinitesimal kleinen Wegänderungen der Plattform O im Versuchsraum A kann die Plattform O auch auf beliebig komplexen Wegen von Position X nach Position Y bewegt werden. Damit lassen sich dann auch die auf die Plattform O und damit auf das Objekt einwirkende Kräfte messen, wenn die Plattform O beispielsweise auf einer Kreisbahn oder auf einer Zickzackbahn geführt wird. Die vorliegende erfindungsgemäße Vorrichtung ermöglicht somit auch das Nachbilden von komplexeren Situationen im Versuchsraum A und die Auswertung der daraus resultierenden Kräfte oder Beschleunigungen.

In einer weiteren Ausführungsform können zusätzlich die Seilantriebe SA1, SA2 und SA3 außerhalb des Versuchsraumes A verfahren werden (in Figur 1 mit Pfeilen dargestellt). Dadurch wird der Ort der Seilantriebe SA1, SA2, SA3 und damit die Richtung der auf die Plattform O einwirkenden Kraftänderungen verändert. So kann beispielsweise die Plattform O vom Punkt X zum Punkt Y bewegt werden, indem zuerst der Ort des Seilantriebs SA1 so verfahren wird, bis sich das Seil S1 in Richtung einer direkten Verbindungslinie zwischen Punkt X und Punkt Y befindet. Um die Plattform O weiterhin eindeutig zu jeder Position im Versuchsraum A führen zu können, müssen ggf. auch die Orte der Seilantriebe SA2 und SA3 entsprechend verändert werden. Erst danach wird, je nach Ort der Seilantriebe SA1, SA2, SA3, beispielsweise nur noch die Seillänge S1 verkürzt und entsprechend die Seillängen S2 und S3 verlängert. Damit ist nun eine geringere Kraftänderung über die Kraftübertragungseinrichtung mit dem Seilantrieb SA1 und dem Seil S1 notwendig, da die notwendige Längenänderung des Seiles S1 nun dem tatsächlichen kleinsten Abstand zwischen Position X und Position Y entspricht.

Die in Figur 1 gezeigte Ausführung der erfindungsgemäßen Vorrichtung weist drei Kraftübertragungseinrichtungen mit jeweils einem Seil S1, S2, S3 und einem Seilantrieb SA1, SA2, SA3 auf. Die drei Seilantriebe SA1, SA2, SA3 sind dabei so angeordnet, dass die entsprechenden Seile S1, S2, S3 jeweils im Winkel von 120 Grad auf die Plattform O einwirken. Diese Anordnung bewirkt, dass die Plattform O innerhalb des gekennzeichneten Versuchsraumes A durch entsprechend gesteuerte Kraftänderungen zu jeder Position eindeutig geführt werden kann. Die vorliegende Erfindung ist aber nicht auf diese eine Anordnung beschränkt. Vielmehr können die Seilantriebe SA1, SA2, SA3 auch so angeordnet sein, dass die zugehörigen Seile S1, S2, S3einen anderen Winkel als 120 Grad aufweisen. Oder es können auch vier Seilantriebe vorgesehen sein, die dann einen entsprechenden viereckigen Versuchsraum A aufspannen. Es können aber auch sechs Seilantriebe einen näherungsweise runden Versuchsraum A aufspannen, wobei die entsprechenden Seile dann in einem Winkel von 60 Grad auf die Plattform einwirken. Wesentlich bei diesen oder auch weiteren Ausführungen mit einer noch größeren Zahl an Kraftübertragungseinrichtungen ist, dass die Seilantriebe immer so angeordnet sind, dass die Plattform zu jeder Position des durch die Seinantriebe aufgespannten Raumes geführt werden kann.

Weiterhin kann vorgesehen sein, dass die Seile S1,S2 und S3 über zusätzliche Führungseinrichtungen (nicht gezeigt) geführt werden. In diesem Fall müssen an den, in Figur 1 gezeigten, Orten der Seilantriebe SA1, SA2 und SA3 die Führungseinrichtungen angeordnet sein, um weiterhin den gleichen Versuchsraum A aufzuspannen und die gleichen Richtungen der steuerbaren Kraftänderungen vorzugeben wie in der in Figur 1 gezeigten Anordnung. Die Seilantriebe SA1, SA2 und SA3 können in dieser Ausführung dann an einem beliebigen anderen Ort außerhalb des Versuchsraumes A angeordnet sein. Die Führungseinrichtungen können wie zuvor die Seilantriebe SA1, SA2, SA3 auch bewegbar angeordnet sein.

Die in Figur 1 gezeigte Ausführung weist drei Kraftübertragungseinrichtungen mit drei Seilen S1, S2, S3 und drei Seilantrieben SA1, SA2, S3 auf. In einer weiteren Ausführung mit drei Kraftübertragungseinrichtungen könnten zwei der Kraftübertragungseinrichtungen mit Seilen S1, S2 und Seilantrieben SA1, SA2 realisiert werden und die dritte Kraftübertragungseinrichtung aus einem elastischen Material, wie beispielsweise einer mechanischen Feder oder einem elastischen Seil mit einer entsprechend geeigneten Rückstellkraft realisiert werden. Zum Führen der Plattform im Versuchsraum müssen dann nur die Seilantriebe SA1 und SA2 der beiden Kraftübertragungseinrichtungen gesteuert werden, während eine Kraftänderung über die dritte Kraftübertragungseinrichtung durch die Rückstellkraft des benutzten elastischen Materials vorgegeben wird. In dieser Ausführung, aber auch in den anderen Ausführungen ist es vorteilhaft, die mittels Seilen realisierten Kraftübertragungseinrichtungen vorzuspannen, um beispielsweise zu verhindern, dass die Seile den Boden des Versuchsraumes berühren.

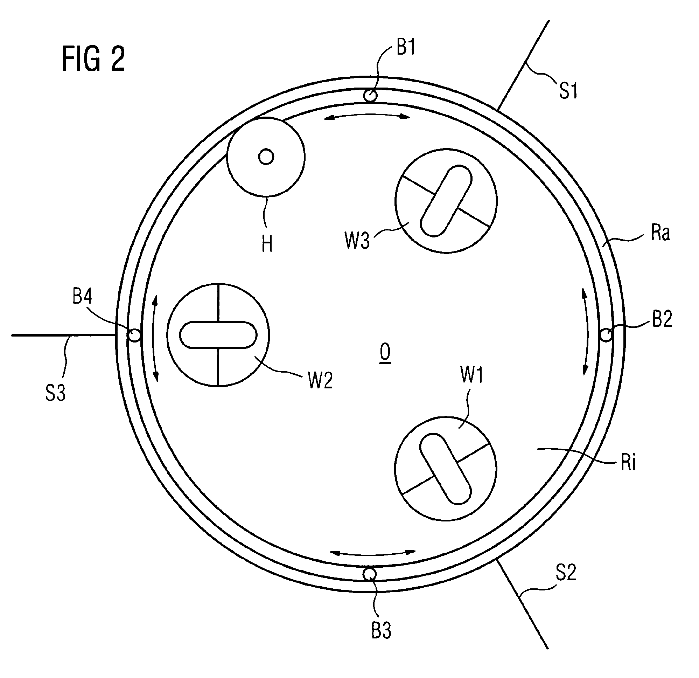

Figur 2 zeigt eine mögliche Ausführungsform der im Versuchsraum A bewegbaren Plattform O. Die hier vorliegende Plattform O weist eine erste Einrichtung Ri auf, an der drei Radmodule W1, W2 und W3 befestigt sind. Ferner weist die Plattform O eine zweite Einrichtung Ra auf. Diese ist mit den Seilen S1,S2,S3, oder ganz allgemein mit den Kraftübertragungseinrichtungen, verbunden. Die erste und die zweite Einrichtung sind so angeordnet, dass sie um eine gemeinsame Achse gegeneinander drehbar sind. Beispielweise können dazu entsprechende Lager B1, B2 und B3 zwischen der ersten (Ri) und der zweiten (Ra) Einrichtung vorgesehen sein. Weiterhin kann ein Hilfsantrieb H vorgesehen sein, um diese Drehung zwischen erster und zweiter Einrichtung zu unterstützen. Dadurch können beispielsweise noch höhere Beschleunigungen auf die auf der ersten Einrichtung Ri angeordnete Objekte erreicht werden, wenn gleichzeitig mit einer gesteuerten Kraftänderung über die Kraftübertragungseinrichtungen die erste Einrichtung Ri innerhalb der zweiten Einrichtung Ra gedreht wird.

Die in Figur 2 gezeigte Plattform O wird in aller Regel mit entsprechenden Mitteln zur Übertragung von Energie und/oder Daten und/oder Materialien in Verbindung stehen. So können beispielsweise Mittel bereitstehen, um die an der Plattform O ermittelten Messdaten zur weiteren Auswertung zum Beispiel an die Steuereinrichtung zu übermitteln. Umgekehrt könnten Steuerdaten auch von der Steuereinrichtung an die Plattform O übermittelt werden. Weiterhin kann auch mit entsprechenden Mitteln beispielsweise die für den Hilfsantrieb H notwendige elektrische Energie übertragen werden oder über entsprechende Mittel auch Kühlmaterialien beispielsweise zum Kühlen der Lager B1, B2 und B3. Vorzugsweise ist zumindest eine der Kraftübertragungseinrichtungen so ausgebildet, dass zusätzlich zu den Kraftänderungen auch Energie und/oder Daten und/oder Materialien übertragbar sind. In ersten Ausbildung kann dabei beispielsweise ein aus dem Stand der Technik für die Übertragung von elektrischer Energie oder Daten geeignetes Kabel parallel zu einem der Seile S1, S2 oder S3 geführt werden. Dabei muss darauf geachtet werden, dass Kraftänderung weiterhin nur über die Seile S1, S2 oder S3 übertragen wird. Diese Kabel können gleichzeitig mit den parallelen Seilen S1, S2, S3 von den entsprechenden Seilantrieben SA1, SA2, SA3 oder auch von zusätzlichen Seilantrieben auf Spannung gehalten werden. Sind Kabel verfügbar, die beispielsweise zusätzlich zu den elektrischen Eigenschaften auch entsprechende mechanische Eigenschaften, wie hohe Zugbelastung aufweisen, kann in einer weiteren Ausführung die Vorrichtung so ausgebildet sein, dass zumindest eines der Seile S1, S2 oder S3 zur Kraftübertragung und zur Daten- und/oder Energieübertragung benutzt werden kann.

Bildet die bewegbare Plattform O ein Fahrzeug nach, an welchem bestimmte Messungen vorgenommen werden, so kann die Bedienoberfläche der Steuereinrichtung so ausgebildet sein, dass sie ein dem Fahrzeug entsprechendes Lenkrad und Gaspedal aufweist. Der Fahrzeuglenker, der nun sie Steuereinrichtung steuert, gibt nun über das Lenkrad und das Gaspedal an der Steuereinrichtung die Richtung und die Beschleunigung des Fahrzeuges vor. Eine Lenkradbewegung bewirkt dabei eine Steuerung der Radmodule W1, W2 und W3 und indirekt zusammen mit der Änderung des Gaspedalwertes eine Steuerung der über die Kraftübertragungseinrichtungen übertragenen Kraftänderungen und dementsprechend eine Bewegung und Beschleunigung des Fahrzeuges im Versuchsraum A. Der zusätzlich vorgesehene Hilfsantrieb H kann sowohl über die Lenkradbewegung als auch über den Gaspedalwert gesteuert werden.

## Patentansprüche

1. Vorrichtung zum Führen einer bewegbaren Plattform (O) in einem zweidimensionalem Versuchsraum (A),
**gekennzeichnet durch**
- zumindest drei, mit der Plattform (O) verbundenen, Kraftübertragungseinrichtungen;
- einer Steuereinrichtung zum Steuern von Kraftänderungen über die mit der Steuereinrichtung verbundenen Kraftübertragungseinrichtungen;
- wobei die Kraftübertragungseinrichtungen so angeordnet sind und so mit dem Plattform (O) verbunden sind, dass die über die Kraftübertragungseinrichtungen von außerhalb des Versuchsraums (A) auf die Plattform (O) einwirkenden Kraftänderungen die Plattform (O) zu einer eindeutig bestimmten Position im Versuchsraum (A) führt.

2. Vorrichtung nach Anspruch 1,
**dadurch gekennzeichnet,**
**dass** zumindest zwei der Kraftübertragungseinrichtungen jeweils ein Seil (S1,S2) und einen außerhalb des Versuchsraums (A) angeordneten Seilantrieb (SA1,SA2) aufweisen, wobei das eine Ende der Seile (S1,S2) mit der im Versuchsraum (A) bewegbaren Plattform (O) und das andere Ende der Seile mit den entsprechenden Seilantrieben (SA1,SA2) verbunden ist und wobei die Seilantriebe (SA1,SA2) durch die Steuereinrichtung steuerbar sind.

3. Vorrichtung nach Anspruch 2,
**dadurch gekennzeichnet,**
**dass** die Seile (S1,S2,S3) über außerhalb des Versuchsraums (A) angeordneten Führungseinrichtungen geführt werden.

4. Vorrichtung nach Anspruch 2 oder 3,
**dadurch gekennzeichnet,**
**dass** die Seilantriebe (S1,S2,S3) und/oder die Führungseinrichtungen außerhalb des Versuchsraums (A) bewegbar angeordnet sind und die Bewegungen von der Steuereinrichtung steuerbar sind.

5. Vorrichtung nach einem der vorherigen Ansprüche 1 bis 4,
**dadurch gekennzeichnet,**
**dass** Mittel zur Übertragung von Energie und/oder Daten und/oder Materialien von und zur im Versuchsraum (A) bewegbaren Plattform (O) vorgesehen sind.

6. Vorrichtung nach Anspruch 5,
**dadurch gekennzeichnet,**
**dass** zumindest eine der Kraftübertragungseinrichtungen entsprechende Mittel zur Übertragung von Energie und/oder Daten und/oder Materialien aufweist.

7. Vorrichtung nach einem der Ansprüche 1 bis 6,
**dadurch gekennzeichnet,**
**dass** die Kraftübertragungseinrichtungen vorgespannt sind.

8. Vorrichtung nach einem der vorherigen Ansprüche,
**dadurch gekennzeichnet,**
**dass** die Plattform (O) eine erste Einrichtung (Ri) aufweist die von einer zweite Einrichtung (Ra) umfasst ist, wobei die zweite Einrichtung (Ra) mit den Kraftübertragungseinrichtungen verbunden ist, und wobei die erste (Ri) und die zweite (Ra) Einrichtung um eine gemeinsame Achse gegeneinander drehbar sind.

9. Vorrichtung nach Anspruch 8,
**dadurch gekennzeichnet,**
**dass**
- die erste Einrichtung (Ri) einem Fahrzeug nachgebildet ist und mindestens drei Radmodule aufweist, wobei mindestens eines der Radmodule (W1,W2,W3) lenkbar ist,
- die zweite Einrichtung (Ra) ein Ring ist, der mit den Kraftübertragungseinrichtungen verbunden ist, und wobei die einem Fahrzeug nachgebildete erste Einrichtung drehbar im Ring gelagert ist.

10. Vorrichtung nach Anspruch 8 oder 9,
**dadurch gekennzeichnet,**
**dass** ein Hilfsantrieb (H) vorgesehen ist, die Drehung zwischen erster (Ri) und zweiter (Ra) Einrichtung zu unterstützen, wobei der Hilfsantrieb (H) von der Steuereinrichtung gesteuert wird.
